# EUROPÄISCHE PATENTSCHRIFT

(11) **EP 2 371 670 B1**
(45) Veröffentlichungstag und Bekanntmachung des Hinweises auf die Patenterteilung: **28.08.2019**
(21) Anmeldenummer: 11157589.0
(22) Anmeldetag: 10.03.2011
(51) Int. Cl.: B62B 7/10, B62B 7/14, B62B 9/20

(54) **Wagengestell für Kinder- oder Puppenwagen**
Carriage frame for children's or dolls' buggies
Structure de chariot pour poussettes de puériculture ou à usage ludique

(30) Priorität: 31.03.2010 DE 202010000510 U
(43) Veröffentlichungstag der Anmeldung: 05.10.2011
(73) Patentinhaber: Curt Würstl Vermögensverwaltungs-GmbH & Co. KG, 95032 Hof (DE)
(72) Erfinder: Würstl, Jan-Stefan, 95194, Regnitzlosau (DE)
(74) Vertreter: Sperschneider, Alexandra

(56) Entgegenhaltungen:
- GB-A- 686 401
- GB-A- 1 272 304
- GB-A- 2 471 289
- US-A- 3 881 739
- US-A- 5 484 046
- US-A1- 2002 060 438
- US-A1- 2005 110 231

## Beschreibung

Die vorliegende Erfindung betrifft ein Wagengestell für Kinder- oder Puppenwagen mit den Merkmalen des Patentanspruches 1.

Aus dem Stand der Technik sind verschiedene Arten von Wagengestellen für Kinder- oder Puppenwagen bekannt.

So ist beispielhaft aus der DE 201 12 118 U1 ein Wagengestell für einen Schiebewagen bekannt, bei welchem hintere Stützstreben, an deren Enden sich hintere Räder befinden, nach vorne in Richtung Vorderseite der Holme verschwenkbar sind. Hierdurch kann das Wagengestell zusammengeklappt werden.

Aus der WO 2005/002946 A2 sind eine Vorrichtung für die Höhenverstellung eines Kindersitzes sowie teleskopisch verstellbare Fußstützen offenbart. Die Verriegelungsvorrichtung zur Höheneinstellung des Kindersitzes ist an einem Schaft an einem Wagen oder an einem Stuhl angeordnet. Die Verriegelungsvorrichtung besteht aus einem Schaft, der teilweise oder völlig das Gehäuse umgibt und einen Griff, der sich exzentrisch dreht, um gegenüber dem Schaft eine Spannung und eine Reibung zu erzeugen.

Aus der EP 1 438 222 B1 ist ein Wagen, vorzugsweise ein zusammenklappbarer Wagen für Kinder oder zum Einkaufen offenbart. Dieser Wagen weist ein Gestell mit Rädern und mindestens ein abnehmbares Modul auf. Das Gestell besteht aus einer zentralen Hauptstützstange, die mit einem Quergriff am oberen Ende und mit einem Querstück am unteren Ende ausgestattet ist, das eine Plattform oder Achse mit Rädern an jedem Ende bildet. Weiterhin ist eine zusätzlich Stützstange vorhanden, die an ihrem oberen Ende an der Hauptstützstange zwischen den äußeren Enden der Hauptstützstange befestigt ist und mit mindestens einem zweiten Querstück am unteren Ende ausgestattet ist.

Aus der EP 1 466 810 A1 ist ein Schiebewagen offenbart, der aus einer aufgerichteten in eine zusammengelegte Stellung und umgekehrt faltbar ist, wobei mindestens ein Vorderrad und mindestens ein Hinterrad vorhanden sind, wobei die Räder mittels eines zusammenlegbaren Faltmechanismus miteinander verbunden sind.

Aus der WO 2003/035448 A1 ist ein Schiebewagen bekannt, der aus einer im Wesentlichen einstückig ausgestalteten stangenförmigen Einheit besteht, an welcher ein Sitz für ein Kind befestigbar ist, und welcher zusätzlich eine Aufnahmevorrichtung für Gepäckstücke oder Tragetaschen aufweist. Dieser Schiebewagen ist zusammenklappbar.

Aus der DE 10 2007 047 578 A1 ist ein Kinderwagen mit einem Gestellrahmen bekannt, an welchem ein Sitz, ein Hand- und Schiebegriff sowie zumindest drei Räder angeordnet sind. An einer zentralen Säule, die höhenverstellbar ist, ist der Kinderwageneinsatz befestigbar. Ferner ist an der Säule eine Schiebestange befestigt. Eine ähnliche Struktur weist auch der Kinderwagen gemäß der DE 203 06 681 U1 auf, bei dem die Säule in der Höhe nicht verstellbar ist. Die Säule weist Träger mit Haltevorrichtungen für die Aufnahme eines Schalensitzes für ein Kleinkind auf. An dem Schalensitz sind U-förmige Bügel schwenkbeweglich befestigt, deren Schenkel in einer Ausführungsform an der Haltevorrichtung befestigt sind.

Aus der CH-PS 255589 ist ein Kinderschiebewagen mit vier Rädern bekannt, bei dem der Sitz in einer unteren Plattform integriert ist. Die Schiebestange weist einen Quergriff zum Schieben des Gefährts auf.

Aus der US 2007/0257471 A1 ist ein dreirädriger Kindersportwagen bekannt, der an einer Schiebestange seitliche Träger für hintere Räder und an einer gebogenen Verlängerung ein Vorderrad aufweist. Der Träger für den Kinderwageneinsatz ist an der Schiebestange höhenverstellbar angebracht. Des Weiteren befindet sich ein weiterer Träger mit U-förmigen Armen an der Schiebestange zum Halt verschiedener Kinderwageneinsätze. Am oberen Ende der Schiebestangen ist ein Schiebebügel angebracht.

Ferner ist aus der US 2007/0246915 A1 ein Kinderwagen bekannt, der zwei parallele Schiebestangen, die dicht beieinander liegen, aufweist, an deren unteren Enden Längsholme befestigt sind und an denen eine Haltevorrichtung für einen Kinderwageneinsatz angebracht ist. Dieser Einsatz ist durch zusätzliche Stangen an den unteren Längsholmen befestigt. Am oberen Ende weisen die Schiebestangen ein Brückenteil sowie Handgriffe auf.

Die gattungsgemäße Druckschrift US 2005/110231 A1 offenbart einen praktischen, multifunktionalen Koffer, welcher zum Transport vielseitig einsetzbar und bequem nutzbar sein soll. Der hier offenbarte Koffer lässt sich auch in ein Wagengestell mit Sitzmöglichkeit umwandeln. Allerdings weist der Koffer den Nachteil auf, dass im Untergestell stets das Koffervolumen verbleibt und hierdurch die Höhe des Sitzelements festgelegt ist. Insbesondere beim Transport von Kindern ist dies ungünstig, da das Kind in Bodennähe sitzt und insbesondere den Abgasen direkt auf Gesichtshöhe ausgesetzt ist. Ferner ist auch die Sitzhöhe durch das entsprechende Koffervolumen vorbestimmt.

Die GB 2471289 A wurde am 29.12.2010 veröffentlicht und offenbart ein gattungsgemäßes Wagengestell mit einer Höhenverstellung des Sitzes und einer unter dem Basiselement verstaubaren Schiebestange.

Aus der US 5,484,046 A ist ein mobiler Koffer mit vier Rädern und einer Schubstange offenbart. Die Schubstange kann über Verrastungsmittel schwenkbar ausgebildet werden und entsprechend in den Koffer versenkbar ausgebildet sein.

Schließlich offenbart die Druckschrift US 2002/0060438 A1 einen mobilen Wagen für Kinder, welcher unterhalb der Sitzfläche ein Kühlfach zum entsprechenden Kühlen von Getränken oder Nahrungsmitteln bereithält.

Nachteilig bei diesem bekannten Stand der Technik ist jedoch, dass die Schiebestange stets als ein sperriges Element am Wagengestell verbleibt, welches die Größe im zusammenklappbaren Zustand definiert. Weiterhin ist problematisch, dass die Wagengestelle schwergewichtig ausgeführt sind, um im aufgeklappten Zustand ausreichend Stabilität zu gewährleisten. Schließlich benötigen Wagengestelle nach dem bekannten Stand der Technik selbst im zusammengeklappten Zustand einen relativ großen Stauraum.

Die Aufgabe der vorliegenden Erfindung ist es daher, die aus dem Stand der Technik bekannten Nachteile zu vermeiden und insbesondere den Stauraum, den das Wagengestell im nicht benutzten Zustand benötigt, möglichst klein zu halten. Außerdem soll das Wagengestell dazu geeignet sein, um universelle Einsätze auf dem Wagengestell anordnen zu können. Bei den Einsätzen und anbringbaren Elementen handelt es sich insbesondere um Babyschalen oder Kin dersitze. Des Weiteren soll ein erweiterter Nutzen gegeben sein.

Diese Aufgabe löst die Erfindung durch Ausgestaltung des Wagengestells gemäß den im Patentanspruch 1 angegebenen Merkmalen. Vorteilhafte Ausgestaltungen der Erfindung ergeben sich anhand der abhängigen Unteransprüche, der weiteren Beschreibung und insbesondere der Beschreibung anhand eines konkreten Ausführungsbeispiels.

Ein gattungsgemäßes Wagengestell zeichnet sich dadurch aus, dass die Schiebestange an der Rückseite des Basiselementes schwenkbar gelagert ist und mindestens in der Aufstellposition mittels Arretierungsmittel am Basiselement schräg nach oben und hinten, die Hinterräder überstehend, gehalten ist und nach dem Lösen der Arretierungsmittel und nach einem rückseitigen Umlegen in eine zum Basiselement horizontale Verlängerungsposition auf, in oder unter das Basiselement in eine Verstauposition von hinten nach vorne verschiebbar ist.

Durch die Erfindung sind zwei wesentliche Vorteile gegeben. Der Schwerpunkt des Kinderwagens befindet sich immer vor den Hinterrädern, und zwar fast im Mittenbereich des Basiselementes. Andererseits ist die Schiebestange mit dem obenseitigen Griff von der schiebenden Person ungehindert bedienbar, da die Schiebestange die hinteren Räder im oberen Bereich übersteht. Dies hat zudem den Vorteil, dass beim Befahren von Bürgersteigkanten ein großes Drehmoment durch Druck auf den Griff an der Schiebestange ermöglicht wird, um die Vorderräder auf den Bürgersteig aufheben zu können. Des Weiteren kann der Träger, der den Einsatz aufnimmt, nach unten gefahren werden, bevor die Schiebestange nach hinten umgelegt und vollständig im Basiselement verstaut wird. Selbst der Griff am oberen Ende übersteht dabei die Hinterräder nicht oder nur unmerklich, je nach Ausbildung. Auch bei heruntergestelltem Träger kann der Kinderwagen dennoch als solcher genutzt werden. Dies ist insbesondere dann von Vorteil, wenn schwere Kleinkinder in dem Kindersitzsitzen. Der Träger mit dem Kindersitz kann also sowohl in der untersten Position als auch in einer Befestigungsposition an der Schiebestange genutzt werden. In der unteren Position kann der Träger oder ein daran befestigtes Brett als Lastenträger dienen.

Zur Fixierung des Trägers in einer Höhenlage ist in weiterer Ausgestaltung vorgesehen, dass die mindestens eine Schiebestange ein Profilrohr mit seitlichen Längsführungen für Befestigungsmittel an dem Träger ist und als einzige Schiebestange oder mit einer solchen weiteren parallelen kombiniert ist, wobei beide parallel zur Mittenachse des Basiselementes verlaufend angeordnet sind. An der Innenseite der Führung bzw. der Ausnehmung in dem Träger können als Befestigungsmittel Bolzen vorstehen oder es kann aber auch eine Rippe angeformt sein, so dass der Träger von oben in das Profil hineingeführt werden kann. Die Schiebestange selbst weist einen profilierten Unterteil auf und einen einschiebbaren Oberteil, der teleskopartig nach oben herausgezogen bzw. hineingeschoben werden kann, um so eine Höhenanpassung der Griffebene an die Größe der schiebenden Person vornehmen zu können. Die Rastmittel zum Arretieren des oberen Teils im unteren sind bekannt. So können beispielsweise in dem Profil des unteren Teils der Schiebestange rückseitig Löcher vorgesehen sein, in die ein innenseitig vorgesehener Rastzapfen an dem oberen Teil eingeschwenkt werden kann. Hierzu sind Betätigungselemente am oberen Teil vorgesehen. Umgekehrt kann aber auch ein federbelasteter Rastzapfen an der Rückseite des unteren Teils der Schiebestange befestigt sein, der durch eine Bohrung in der Mantelwand hindurch in ein Loch einer Lochreihe an der kongruenten Wand des oberen Teils der Schiebestange einrastet.

Die Fixierung des Trägers in verschiedenen Höhenlagen kann durch ähnliche Arretierungsmittel erfolgen oder aber auch durch einstellbare Klemm- oder Rastelemente an dem Träger oder an der Schiebestange, welche mit Gegenelementen an dem Träger oder der Schiebestange zusammenwirken. Der Träger ist also nach der Erfindung höhenverstellbar an der mindestens einen Schiebestange befestigt und aus einer oberen Gebrauchsstellung in eine untere, von der Schiebestange entkoppelte Gebrauchsstellung verbringbar, in der der Träger auf einem Kopfteil des Basiselementes aufsitzt. Im oder am Basiselement oder in dem Kopfteil und in dem Träger sind mindestens eine rückseitige Ausnehmung und ein Befestigungsmittel zur Lagefixierung der mindestens einen Schiebestange mindestens in der Aufstellposition vorgesehen. Nach Lösen des Befestigungsmittels kann die Schiebestange nach hinten verschwenkt und, wenn zuvor der Träger in die untere Position verschoben ist, unter bzw. in das Basiselement hineingeschoben werden. Auch dort können Rasten vorgesehen sein, die die Schiebestange in der eingeschobenen Position festhalten, so dass das zusammengeklappte Wagengestell beispielsweise über den Griff an einen Wandhaken gehängt werden kann.

Zur Befestigung eines Einsatzes am Träger ist in weiterer Ausgestaltung vorgesehen, dass die Haltevorrichtung aus einem U-förmigen Träger, dessen Seitenschenkel in einer Gebrauchsstellung nach oben stehen und dessen Brückenteil schwenkbeweglich an oder in dem vorderen Teil des Trägers gelagert ist und an dessen Schenkelenden Verbindungsteile mit Aufnahmen für die Adapter drehbar gelagert sind, die mit den anderen Enden an den Schenkelenden eines weiteren U-förmigen Trägers, ein Kräfteparallelogramm bildend, angelenkt sind, und dass das Brückenteil des weiteren U-förmigen Trägers in mindestens einem Langloch in dem Träger in Richtung der Schiebestange verschiebbar geführt ist oder in einer durchgehenden Lagerbohrung ebenfalls nach hinten verschwenkbar gelagert ist. Wenn der zweite U-förmige Träger ebenfalls verschwenkbar gelagert ist, so wird die Absenkung ausschließlich über das nach hinten bewegte Kräfteparallelogramm bewirkt bei gleichzeitigem Absenken der seitlichen Verbindungsteile. Hier können auch andere Aufnahmen zur Anwendung kommen. Im Hinblick auf die geforderte Stabilität der Verbindung zwischen dem Einsatz und dem Träger hat sich jedoch eine Ausführung unter Verwendung eines Kräfteparallelogramms als vorteilhaft erwiesen. Diese Ausführung hat den Vorteil, dass die an den Verbindungsteilen angebrachten Adapter mitsamt dem Einsatz nach hinten in Richtung der Schiebestange verbracht werden können. Der Einsatz liegt förmlich auf dem Träger auf. Wenn der Einsatz ein Sitzeinsatz ist, kann dieser aus zwei Bügeln bestehen, wobei der obere Bügel auf den unteren aufschwenkbar ist, so dass die Ablagetiefe um ca. die Hälfte verringert werden kann und nach dem Verbringen des Trägers in die unterste Position der Einsatz die Vorderräder nicht übersteht.

Eine vorteilhafte Ausführungsform des Basiselementes sieht vor, dass dieses aus einem Tunnelprofil besteht, oben vollständig abgedeckt ist und für die Schiebestange einen Einschubkanal aufweist. Das Basiselement kann aber auch aus zwei spiegelbildlich ausgebildeten und angeordneten profilierten Längsträgern bestehen, die vorderseitig über ein Brückenelement, an dem das mindestens eine Vorderrad befestigt ist, und rückseitig über das Kopfteil, an dem die Lagerhalter für die Hinterräder befestigt sind, miteinander verbunden sind, wobei die mindestens eine Schiebestange in das Tunnelprofil oder zwischen die beiden Längsträger einschiebbar ist. Mit dem Basiselement sind die Lagerhalter für die Hinterräder über das Kopfteil verbunden und hierzu als Schwinge ausgebildet, die gegen die Kraft einer Feder nach oben verschwenkbar sind, wodurch eine Dämpfung beim Befahren einer Straße gegeben ist. An den Enden der Schwingen befinden sich die Hinterräder. An einem solchen Basiselement können Halter oder Träger für einen Korb oder einen Lastenträger angebracht sein.

Das Wagengestell besteht in einer anderen Ausführung aus einem flächenförmigen Basiselement mit mindestens einem Lagerhalter für das mindestens eine Vorderrad, mit mindestens jeweils einem Lagerhalter für jedes der mindestens zwei Hinterräder und mit einem Schwenklager oder Stecklager zur Aufnahme der mindestens einen Schiebestange. Die Schiebestange ist auf der Mittenachse des Basiselementes von unten nach oben schräg nach hinten ansteigend verlaufend. An der mindestens einen Schiebestange oder über Abstandselemente am Basiselement ist ein im wesentlichen horizontal verlaufender Träger in einer definierten Höhenposition gegenüber dem Basiselement verlaufend befestigbar. An dem Träger sind Haltevorrichtungen zur Aufnahme des mindestens einen abnehmbaren Einsatzes vorgesehen.

Vorteilhaft ist es, dass der Träger höhenverstellbar an der mindestens einen Schiebestange oder an Abstandselementen hieran befestigbar ist. Hierdurch kann der Träger auf die Erfordernisse des abnehmbaren Einsatzes und der in den Einsatz einzubringenden Gegenstände angepasst werden. Im Falle, dass der abnehmbare Einsatz ein Kindersitz ist, kann der Abstand zwischen dem Träger und dem Basiselement des Wagengestelles variiert werden und auf die Größe des Kindes, das im Kindersitz sitzt bzw. sitzen soll, angepasst werden. Außerdem kann in einer vorteilhaften Ausgestaltung der Erfindung der Träger auf das Basiselement abgesenkt werden. Hierdurch wird nur ein besonders geringer Stauraum beim Zusammenklappen des Wagengestells benötigt.

Vorteilhaft ist, dass die herunterklappbare mindestens eine Schiebestange unter das Basiselement in eine Verstauposition verschiebbar ist. Hierdurch wird nur ein besonders geringer Stauraum beim Zusammenklappen und im zusammengeklappten Zustand des Wagengestells benötigt. Die mindestens eine Schiebestange wird stets mit dem Basiselement zusammen aufbewahrt und kann nicht verloren gehen.

Vorteilhaft ist es ferner, wenn im oder am Basiselement mindestens eine Ausnehmung zur Lagefixierung der mindestens einen Schiebestange vorgesehen ist, welche diese in der Aufstellposition oder umgelegten oder eingeschobenen Position arretiert. Hierdurch wird die mindestens eine Schiebestange gegenüber dem Basiselement in einer definierten Position gehalten und arretiert. Die mindestens eine Schiebestange nimmt gegenüber dem Basiselement eine feste und stabile Stellung ein.

Das Basiselement sollte mindestens eine Ausnehmung oder mindestens eine Halterung zur Aufnahme des Trägers aufweisen. Hierdurch kann der Träger direkt auf dem Basiselement angeordnet und fixiert werden. Vorteilhaft ist insbesondere, dass in der Verstauposition der Träger platzsparend anordenbar ist und dennoch fest mit dem Basiselement verbunden bleibt.

Die Einsätze können abnehmbar oder umklappbar angeordnet sein. Der abnehmbare Einsatz kann ein schalenförmiger Trägersitz oder ein Sportwagenaufsatz oder ein Liegeaufsatz oder eine Tragetasche für ein Kleinkind oder für eine Puppe oder eine Tragetasche, ein Korb, ein Behältnis oder eine Gitterbox sein. Die vorgesehenen Adapter stellen einen sicheren Halt dar.

Auch kann der Träger mit einer Drehscheibe versehen sein, an der die Haltevorrichtungen zur Aufnahme des mindestens einen Einsatzes befestigbar sind. Durch die Drehscheibe kann ein auf dem Träger angeordneter abnehmbarer Einsatz in verschiedene Richtungen gedreht werden. Im Falle, dass ein Kindersitz als abnehmbarer Einsatz angeordnet ist, kann dieser derart ausgerichtet werden, dass das Kind in Schieberichtung des Wagengestells blickt oder aber entgegen der Schieberichtung. Je nach Wetter und Alter des Kindes kann die Ausrichtung des Kindersitzes auf dem Träger variabel angepasst werden.

Insbesondere bei einem flächenförmigen Basiselement können an diesem vorstehend mindestens zwei seitliche Führungen für die Aufnahmen des Trägers vorgesehen sein.

Am oberen Ende der mindestens einen Schiebestange ist mindestens ein Schiebeelement, vorzugsweise in Form eines Griffes, befestigbar. Dieser ermöglicht es, das Wagengestell komfortabel zu schieben.

Die Haltevorrichtungen zur Aufnahme des mindestens einen Einsatzes können gerade oder schräg nach oben verlaufende, abgestützte oder nicht abgestützte Haltestangen aufweisen. Auch kann der Träger zusätzlich zu der Befestigung an der mindestens einen Schiebestange mit einem beabstandet hierzu angeordneten Distanzteil am Basiselement abgestützt sein. Hierdurch wird eine besonders sichere und stabile Anordnung des Trägers gewährleistet. Es können somit auch größere Kinder oder schwerere Gegenstände auf dem hochgestellten Träger transportiert werden.

Wenn der Träger als ringförmige Plattform ausgebildet ist und diese einen Mittendurchbruch aufweist, kann in den Mittendurchbruch ein weiterer abnehmbarer Einsatz eingesetzt werden. Außerdem kann beispielsweise eine Tasche oder ein Korb unterhalb eines Trägers angeordnet werden. Ein Korb oder ein Korbeinsatz kann ebenfalls am Träger fixiert sein.

Das Basiselement und/oder der Träger können aus Kunststoff bestehen oder eine Rahmenstruktur aus Kunststoff oder Metall aufweisen. Diese Ausführungsform ermöglicht es, diese Teile besonders leicht auszugestalten und dennoch die notwendige Stabilität sicher zu stellen. Auch kann in dem Basiselement und/oder Träger eine korbförmige Ausformung eingebracht sein oder in die Rahmenstruktur ein Korbeinsatz aus Kunststoff oder Metall einsetzbar sein.

Das mindestens eine Vorderrad ist an einer Radgabel befestigt, die um eine senkrechte Achse verdrehbar angeordnet ist. Dadurch wird ein leichtes Kurvenfahren ermöglicht.

Vorteilhaft ist ferner, wenn jedes der mindestens zwei Hinterräder oder nur eines mit einer Bremsvorrichtung versehen ist, die einzeln oder gemeinsam über eine Hand- und/oder Fußbetätigungseinrichtung gekoppelt bedienbar ist oder sind. Durch die Bremsvorrichtung kann das Wagengestell auf abschüssigem Terrain abgebremst oder gestoppt werden. Ein Nutzer muss nicht mit Kraft das Wagengestell halten, dies übernimmt die Bremseinheit.

Um das Verstaupaket zu verkleinern, kann in weiterer Ausgestaltung vorgesehen sein, dass der Lagerhalter des mindestens einen Vorderrades und/oder die Lagerhalter der Hinterräder an der Unterseite des Basiselementes zur Mittenlängsachse hin verschwenkbar und in einer Aufstellposition arretierbar sind. Hierdurch kann das Wagengestell besonders klein zusammengeklappt werden. Auch kann die mindestens eine Schiebestange im Schwenklager über eine Federanordnung gelagert ist.

Die Federanordnung kann eine Feder aufweisen, die parallel zur Mittenachse des Basiselementes im oder am Schwenklager angeordnet ist. Durch die Federanordnung werden Stöße, welche auf das Basiselement einwirken, gedämpft und nicht direkt an die Schiebestange übertragen.

Im Nachfolgenden wird die Erfindung anhand der in den Zeichnungen dargestellten Ausführungsbeispiele ergänzend erläutert. Diese Beschreibung der Erfindung stellt keine Limitierung der Erfindung auf die konkreten Ausführungsbeispiele dar.

In den Zeichnungen zeigen:
- FIG 1: eine Seitenansicht des erfindungsgemäßen Wagengestells,
- FIG 2: eine Frontalansicht des erfindungsgemäßen Wagengestells,
- FIG 3: eine perspektivische Darstellung des Wagengestells seitlich von oben ohne Einsatz,
- FIG 4: eine perspektivische seitliche Ansicht des Wagengestells von unten ohne Einsatz,
- FIG 5: eine Seitenansicht des Wagengestells, analog zu FIG 1, jedoch mit abnehmbarem Einsatz,
- FIG 6: eine Frontalansicht des Wagengestells, analog zu FIG 2, jedoch mit abnehmbarem Einsatz,
- FIG 7: eine perspektivische Ansicht des Wagengestells seitlich von oben auf das Wagengestell mit abnehmbarem Einsatz,
- FIG 8: eine perspektivische Ansicht des Wagengestells seitlich von unten hinten, analog zu FIG 4, jedoch mit abnehmbarem Einsatz,
- FIG 9: ein weiteres Ausführungsbeispiel eines erfindungsgemäßen Wagengestells in isometrischer Darstellung,
- FIG 10: das in FIG 9 dargestellte Ausführungsbeispiel in der Seitenansicht im aufgestellten Zustand, wie es in FIG 9 dargestellt ist,
- FIG 11: eine Seitenansicht mit teileingeklapptem Einsatz,
- FIG 12: das Ausführungsbeispiel nach FIG 9 bis 11 mit vollständig eingeklapptem Einsatz,
- FIG 13: das in den FIG 10 bis 12 dargestellte Ausführungsbeispiel in der Seitenansicht mit heruntergefahrenem Träger,
- FIG 14: das in den FIG 9 bis 13 dargestellte Ausführungsbeispiel mit heruntergeklappter Schiebestange und
- FIG 15: das in den FIG 9 bis 14 dargestellte Ausführungsbeispiel mit eingeschobener Schiebestange.

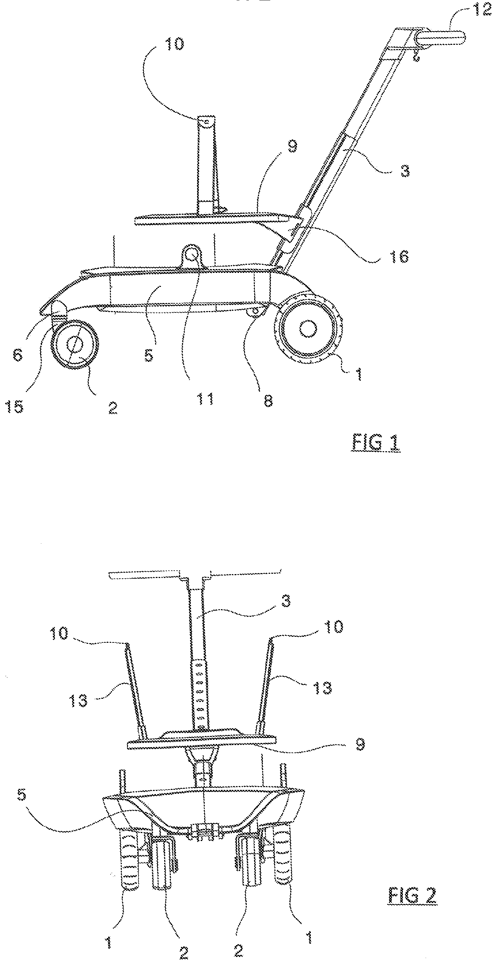

Bei der nachfolgenden Figurenbeschreibung wird figurenübergreifend für identische Elemente in den Figuren bei allen Figuren jeweils dasselbe Bezugszeichen verwendet. Dies dient der Übersichtlichkeit und besseren Verständlichkeit der weiteren konkreten Beschreibung der Erfindung anhand der Figuren FIG 1 bis FIG 15.

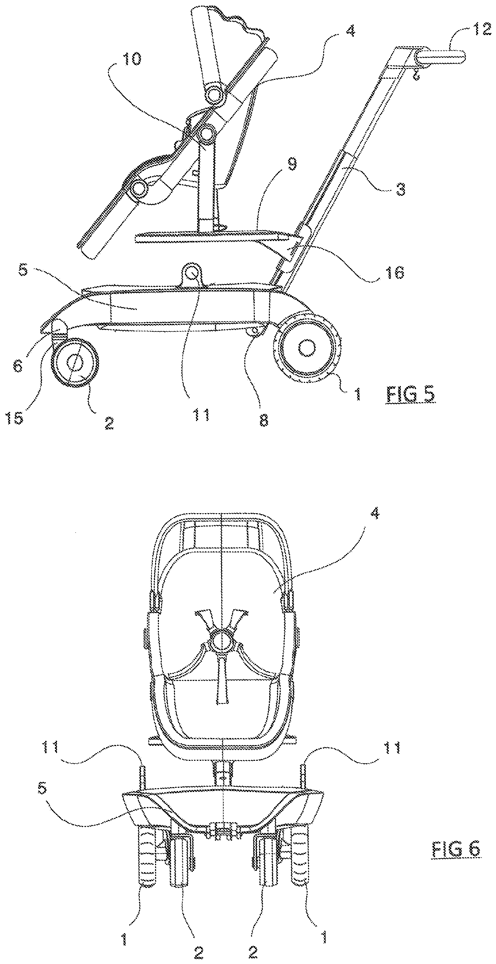

In FIG 1 und FIG 5 ist eine Seitenansicht des Wagengestells dargestellt. In FIG 1 ist das Wagengestell ohne Einsatz, in FIG 5 ist das Wagengestell mit einem eingesetzten abnehmbaren Einsatz dargestellt.

In FIG 2 und FIG 6 ist eine Frontalansicht des Wagengestells dargestellt. In FIG 2 ist das Wagengestell ohne Einsatz, in FIG 6 ist das Wagengestell mit einem eingesetzten abnehmbaren Einsatz dargestellt.

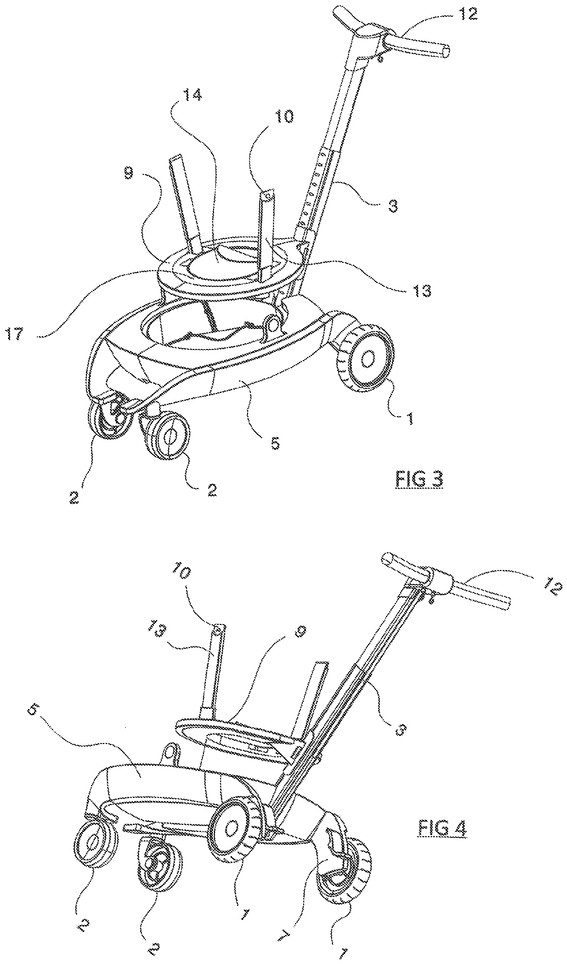

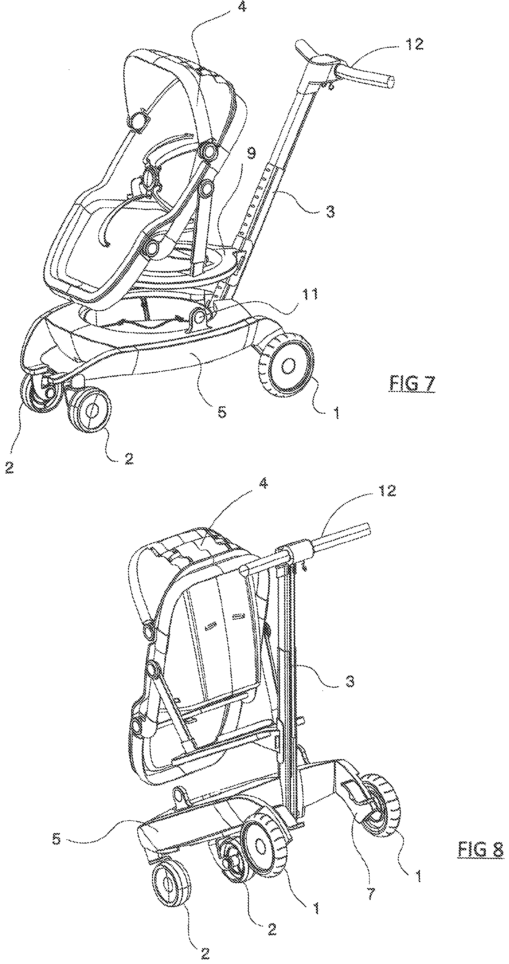

In FIG 3 und FIG 7 ist eine perspektivische Darstellung des Wagengestells seitlich von oben dargestellt. In FIG 3 ist das Wagengestell ohne Einsatz, in FIG 7 ist das Wagengestell mit einem eingesetzten abnehmbaren Einsatz dargestellt.

In FIG 4 und FIG 8 ist eine perspektivische seitliche Ansicht des Wagengestells von unten dargestellt. In FIG 3 ist das Wagengestell ohne Einsatz, in FIG 7 ist das Wagengestell mit einem eingesetzten abnehmbaren Einsatz dargestellt.

Das Wagengestell weist mindestens zwei Hinterräder 1 auf, die an Lagerhaltern 7, die in FIG 1 und 4 nicht ersichtlich sind, am Basiselement 5 befestigbar sind. Die mindestens zwei Hinterräder 1 sind vorzugsweise über Steckachsen mit dem Wagengestell über das Basiselement 5 verbindbar und somit flexibel und einfach vom Basiselement 5 entfernbar. In einer vorteilhaften Ausgestaltung der Erfindung sind die hinteren Steckachsen gemeinsam mit den Hinterrädern 1 an das Basiselement 5 anklappbar ausgestaltet.

Im Weiteren ist mindestens ein Vorderrad 2 am Basiselement 5 angeordnet. Dieses mindestens eine Vorderrad 2 ist in vorzugsweiser Ausgestaltung als Zwillingsrad ausgestaltet. In einer alternativen Ausgestaltung sind zwei Vorderräder 2 vorhanden. Das mindestens eine Vorderrad 2 ist über einen Lagerhalter 6 mit dem Basiselement 5 verbindbar. Der Lagerhalter 6 ist in vorteilhafter Ausführung in Form einer Radgabel 15 ausgeführt. Der mindestens eine Lagerhalter 6 für das mindestens eine Vorderrad 2 sowie die Lagerhalter 7 für die Hinterräder 1 sind an einem Basiselement 5 angeordnet.

Das Basiselement 5 weist in etwa mittig zur Länge des Basiselementes 5 Abstandselemente 11 auf. Im Weiteren ist eine Schiebestange 3 angeordnet. Die Schiebestange 3 ist in vorzugsweiser Ausführung als Teleskopstange ausgebildet. Die Schiebestange 3 ist als einzelne Schiebestange ausgebildet. In einer vorteilhaften Ausgestaltung der Erfindung sind jedoch mindestens zwei Schiebestangen vorhanden, welche äquidistant zueinander am Basiselement 5 des Wagengestells anordenbar sind. Die mindestens eine Schiebestange 3 ist über mindestens ein Schwenklager 8 mit dem Basiselement 5 verbindbar. In einer vorteilhaften Ausgestaltung der Erfindung ist im Schwenklager 8 eine Federanordnung vorhanden, welche eine Dämpfung zwischen dem Basiselement 5 und der mindestens einen Schiebestange 3 bewirkt, so dass beim Schieben des Wagengestells auf das Wagengestell einwirkende Stöße und Schläge nicht direkt in die Schiebestange 3 geleitet werden, sondern über die Federanordnung gedämpft werden.

Die Schiebestange 3 weist an ihrem oberen Ende ein Schiebeelement 12 auf. Das Schiebeelement 12 ist in vorzugsweiser Ausgestaltung als gepolsterte Stange oder als Griff ausgeführt.

An der Schiebestange 3 ist ein Träger 9 befestigbar. Auf dem Träger 9 sind diverse abnehmbare Einsätze 4 einsetzbar. In vorzugsweiser Ausgestaltung sind die abnehmbaren Einsätze 4 ein schalenförmiger Trägersitz oder ein Sportwagenaufsatz oder ein Liegeaufsatz oder eine Tragetasche oder ein Kindersitz für ein Kleinkind oder für eine Puppe oder eine Tragetasche, ein Korb, ein Behältnis oder eine Gitterbox.

Der Träger 9 weist eine Halterung 16 auf, mittels welcher der Träger 9 mit der Schiebestange 3 verbindbar ist. Die Halterung 16 ist in der Weise ausgestaltet, dass die Halterung 16 in an oder in der Schiebestange 3 vorhandenen Widerlagern eingreift und über diese kraft- und formschlüssig verbindbar ist.

In einer weiteren Ausgestaltung ist der Träger 9 über Abstandselemente 11 direkt auf dem Basiselement 5 befestigbar. Der Träger 9 weist, wie in FIG 3 dargestellt, einen Mittendurchbruch 14 auf. In diesem Mittendurchbruch 14 können die abnehmbaren Einsätze 4 oder aber andere Einsätze angeordnet und befestigt werden. In einer vorteilhaften Ausgestaltung der Erfindung ist als ein solcher Einsatz ein Korb, der formschlüssig in den Durchbruch einsetzbar ist, vorgesehen.

Auf dem Träger 9 sind Haltevorrichtungen 10 angeordnet, welche insbesondere mit Haltestangen 13 mit dem Träger 9 verbunden sind. An diese bzw. in diese Haltevorrichtungen 10 kann ein abnehmbarer Einsatz 4 eingebracht und dort angeordnet und befestigt werden.

In FIG 5 ist ein solcher Einsatz als Kindersitz ausgeführt. Vorteilhaft ist insbesondere, dass der Träger 9 an der Schiebestange 3 federartig gelagert ist, so dass Erschütterungen, welche beim Schieben des Wagengestells über ein Terrain erfolgen, nicht direkt auf den abnehmbaren Einsatz 4 einwirken, sondern über die federnde Anordnung abgemildert und abgefedert werden.

Die Schiebestange 3 ist über das Schwenklager 8 um die Querachse des Basiselements 5 verschwenkbar, so dass die Schiebestange 3 aus ihrer schräg aufrecht stehenden Position in eine ebene Position zur Mittenachse des Basiselementes 5 verbringbar ist und somit unter das Basiselement 5 klappbar oder einschiebbar angeordnet ist. Durch diese Anordnung ist das Wagengestell auf einen geringen Raum zusammenklappbar und -schiebbar. Beim Zusammenklappen/Zusammenschieben ist vorzugsweise der Träger 9 von der Schiebestange 3 abzunehmen. Der Träger 9 kann dann auf dem Basiselement 5 befestigt werden. Die Schiebestange 3 ist vorzugsweise auch abnehmbar. Das entsprechende Lager 8 für die Schiebestange 3 ist dann vorzugsweise in Form eines Stecklagers, welches am Basiselement 5 angeordnet ist, ausgestaltet. Im Weiteren sind am Basiselement 5 Haltevorrichtungen vorgesehen, in welche die Schiebestange 3 dann eingeklinkt werden kann, so dass auch bei abgenommener Schiebestange 3 diese mit dem Basiselement 5 verbindbar ist und nicht getrennt von demselben aufzubewahren ist.

Im Weiteren ist die Schiebestange 3 an der Rückseite des Basiselementes 5 angeordnet.

Der Träger 9 ist an der Schiebestange 3 höhenverstellbar angeordnet. Über das Schwenklager 8 für die Schiebestange 3 ist die Schiebestange von einer Aufstellposition in eine Liegeposition durch Umlegen auf die Unterseite des Basiselementes 5 verbringbar. Hierbei handelt es sich um die Verstauposition. In einer anderen alternativen Ausführungsform ist die Schiebestange 3 zum Basiselement 5 in einer horizontalen Verlängerungsposition herunterklappbar und dann unter das Basiselement 5 einschiebbar.

Es sind Arretierungsmittel am Basiselement 5 und/oder am Schwenklager 8 oder dem Stecklager vorgesehen, welche dazu dienen, die Schiebestange 3 am Basiselement 5 zu arretieren, sowohl in der aufrechten Position als auch in der auf das Basiselement 5 geklappten Verstauposition oder in der heruntergeklappten und eingeschobenen Position unter das Basiselement 5. Am Basiselement 5 ist zusätzlich eine Ausnehmung zur Lagefixierung der Schiebestange 3 vorgesehen. Diese Lagefixierung über die Ausnehmungen erfolgt sowohl in der Aufstellposition als auch der umgelegten oder eingeschobenen Position der Schiebestange 3 in bzw. am Basiselement 5. Das Basiselement 5 weist außerdem eine Ausnehmung auf, bzw. eine Halterung, an welcher der Träger 9 direkt auf dem Basiselement 5 anordenbar ist. Der Träger 9 weist zur Aufnahme der abnehmbaren Einsätze 4 Vorrichtungen auf, in oder an welchen die abnehmbaren Einsätze 4 aufsetzbar und mit diesem form- und kraftschlüssig verbindbar sind. Der Träger 9 ist jedoch abnehmbar oder umklappbar sowohl an der Schiebestange 3 als auch am Basiselement 5 angeordnet.

Der abnehmbare Einsatz 4 ist in vorzugsweiser Ausgestaltung ein schalenförmiger Trägersitz oder ein Sportwagenaufsatz oder ein Liegeaufsatz oder eine Tragetasche oder ein Autokindersitz für ein Kleinkind oder für eine Puppe oder eine Tragetasche, ein Korb, ein Behältnis oder eine Gitterbox. Dies ermöglicht es, das Wagengestell auf verschiedene Einsätze anpassbar auszugestalten und anzupassen. Es können die verschiedensten Einsätze am bzw. im Wagengestell eingebracht werden. Der Träger 9 ist mit einer Drehscheibe 17 versehen. An der Drehscheibe 17 sind die Haltevorrichtungen 10, 13 zur Aufnahme des mindestens einen abnehmbaren Einsatzes 4 befestigbar. Durch die Drehscheibe 17 kann der abnehmbare Einsatz 4, angeordnet auf dem Träger 9, in verschiedene Stellungen gedreht werden. Verwendet man als abnehmbaren Einsatz 4 einen Kindersitz, so kann der Kindersitz in Fahrtrichtung ausgerichtet sein oder entgegen der Fahrtrichtung. Dies ermöglicht es einem Nutzer des Wagengestells, den Kindersitz entsprechend so anzuordnen, dass entweder das Kind in Fahrtrichtung sieht oder aber er das Kind beim Schieben vor sich sieht. Dies ist insbesondere von Vorteil, da auch in der zusammengebauten Position über die Drehscheibe 17 der abnehmbare Einsatz 4 ausgerichtet werden kann, so dass ein Nutzer einen angeordneten abnehmbaren Einsatz 4 entsprechend in diejenige Position verdrehen kann, die für ihn am günstigsten ist.

Der Träger 9 ist in einer vorzugsweisen Ausgestaltung zusätzlich zu der Befestigung an der Schiebestange 3 mit beabstandet hierzu angeordneten Distanzteilen 11 am Basiselement 5 abgestützt.

Der Träger 9 ist als ringförmige Plattform ausgestaltet und weist einen Mittendurchbruch 14 auf. In den Mittendurchbruch 14 ist ein weiterer abnehmbarer Einsatz einsetzbar. Ein solcher weiterer Einsatz kann beispielsweise ein Korb oder ein Korbeinsatz oder eine Tragetasche oder ein Netz sein, welche an den Haltevorrichtungen 10, die an dem Träger 9 angeordnet sind, befestigbar ist.

In einer weiteren vorteilhaften Ausgestaltung der Erfindung sind die Haltevorrichtungen 10 abnehmbar ausgestaltet. Der entsprechende weitere Einsatz ragt durch den Mittendurchbruch 14 nach unten. Dies trägt insbesondere dazu bei, dass der Schwerpunkt des Wagengestells beim Einbringen von schweren Waren abgesenkt wird. Dies stabilisiert das Wagengestell.

In einer vorteilhaften Ausgestaltung der Erfindung sind der Träger 9 und/oder das Basiselement 5 aus Kunststoff hergestellt und weisen eine Rahmenkonstruktion aus Kunststoff oder Metall auf. Diese Ausgestaltung verleiht der Erfindung eine besondere Stabilität. Zugleich wird aber das Gewicht des Wagengestells gering gehalten.

In das Basiselement 5 und/oder den Träger 9 ist in einer vorteilhaften Ausgestaltung der Erfindung eine korbförmige Ausformung eingebracht oder aber in die Rahmenstruktur ist ein Korbeinsatz aus Kunststoff oder Metall einsetzbar. Dies macht das Wagengestell flexibel einsetzbar.

In einer weiteren vorteilhaften Ausgestaltung der Erfindung ist das mindestens eine Vorderrad 2 an einer Radgabel 15 befestigt, die um eine senkrechte Achse verdrehbar angeordnet ist. Dadurch kann über die Radgabel 15 das mindestens eine Vorderrad 2 schnell ab- und angebaut werden.

Jedes der mindestens zwei Hinterräder 1 oder aber nur eines der Hinterräder 1 ist mit einer Bremsvorrichtung versehen. Die Bremsvorrichtung kann über eine Hand- oder Fußbestätigungseinrichtung gekoppelt bedienbar sein. Es kann damit das Wagengestell über die Bremsvorrichtung abgebremst werden. Dies ist insbesondere von Bedeutung, wenn mit dem Wagengestell schwerere Gegenstände transportiert werden, wie beispielsweise ein größeres Kind. Dann muss der Nutzer des Wagengestells nicht mit Eigenkraft dieses auf einem abschüssigen Terrain anhalten, hierzu kann er sich der Bremsvorrichtung bedienen. In vorteilhafter Weise ist für die Bremsvorrichtung ein handbetätigbarer Bremshebel am Schiebeelement 12 angeordnet.

In einer weiteren vorteilhaften Ausführungsform der Erfindung sind die Lagerhalter 6 und 7 an der Unterseite des Basiselements 5 zur Mittenachse hin verschwenkbar angeordnet und in einer Aufstellposition arretierbar. Dadurch kann das Wagengestell besonders platzsparend zusammengelegt werden.

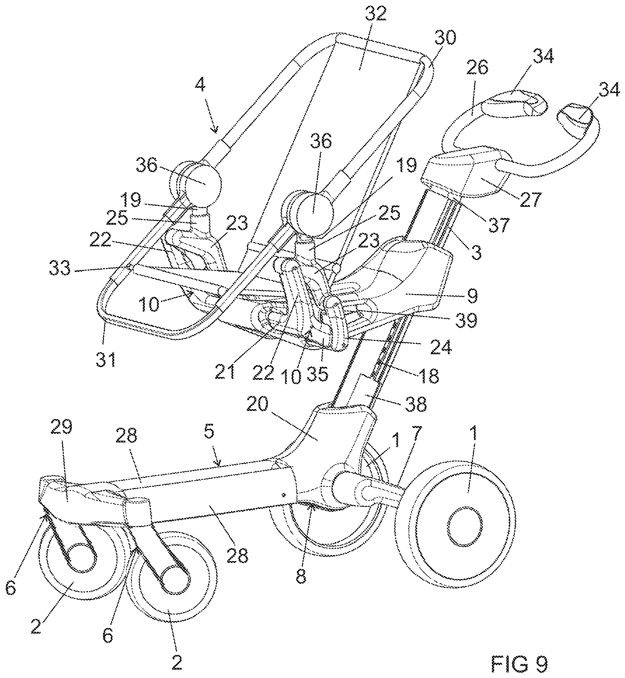

Eine weitere Ausgestaltungsform des erfindungsgemäßen Wagengestells ist in den FIG 9 bis 10 dargestellt. Die wesentlichen Teile des Wagengestells sind aus der isometrischen Darstellung in FIG 9 ersichtlich. Der primäre Unterschied zu dem zuvor beschriebenen Ausführungsbeispiel besteht darin, dass das Basiselement 5 nicht als Flächenelement ausgebildet ist, sondern dass hier zwei Längsträger 28, beispielsweise parabelförmige, oben geschlossene Tunnel aus Aluminium oder Kunststoff, vorgesehen sind oder ein anderes Profil, wobei die beiden Längsträger 28 parallel verlaufend angeordnet sind. Der Abstand zwischen den beiden Längsträgern 28 bildet den Aufnahmekanal für die darin einschiebbare Schiebestange 3. Diese Schiebestange 3 ist schwenkbeweglich um die Achse 8 in einer Ausnehmung des Kopfteiles 20 gelagert und kann aus der dargestellten aufgestellten Position, in welcher die Schiebestange 3 verriegelt ist, in eine Einschiebeposition heruntergeschwenkt werden. Der Riegel ist nicht dargestellt und blockiert die Schwenkbewegung der Schiebestange 3 nach hinten. Dazu ist die Ausnehmung hinten offen.

An dem Kopfteil 20 sind die Lagerhalter 7 für die Hinterräder 1 als Schwingen angelenkt. Innenliegende Federanordnungen dienen der federnden Aufhängung. An den inneren Enden der Lagerhalter 7 sind Lager für die Aufnahme der Hinterräder 1 vorgesehen. An der Vorderseite sind die beiden Längsträger 28 über das Brückenelement 29 miteinander verbunden. Das Brückenelement 29 ist so ausgelegt, dass es seitlich die Längsträger 28 übersteht. An deren Enden sind Lagerhalter 6 für Vorderräder 2 angebracht. Die Lagerhalter 6 bestehen aus einer Gabel, die abgeschrägt angeordnet ist und an der Oberseite mittels eines Bolzens in den seitlichen Aufnahmen um eine senkrechte Achse drehbar gelagert ist. Diese Anordnungen sind bekannt. An den Gabelenden befinden sich die Lager für die Vorderräder 2. Durch diese Anordnung ist eine erhöhte Kippsicherheit gegeben. Grundsätzlich kann aber auch an dem Brückenelement 29 ein einzelner Lagerhalter 6 für ein Vorderrad 2 vorgesehen sein; in diesem Fall wäre eine dreirädrige Ausführung des Wagengestells gegeben.

Wie aus der Darstellung ersichtlich, weist die Schiebestange 3 beidseitig Längsführungen 18 auf. Diese Längsführungen 18 können Lochreihen, wie die dunklen Punkte zeigen, aufweisen. Die Längsführungen 18 sind sowohl an der einen als auch an der anderen Seite vorgesehen. Wenn der obere Abschnitt 37 der Schiebestange 3, der teleskopartig in den unteren Teil einschiebbar ist, nach oben gezogen ist, kann der Träger 9, der längs- und rückseitig einen Durchbruch aufweist und innenseitig vorstehende Führungsansätze, die in die Längsführungen 18 eingreifen , auf die Schiebestange aufgeschoben werden. Es ist zweckmäßig, die Längsführung 18 in dem Träger 9 ebenfalls als Ausnehmung auszubilden und hinten offen zu gestalten, so dass auch bei nicht gänzlich herausgezogenem, oberen Abschnitt der Schiebestange 3 der Träger 9 auf den unteren Abschnitt der Schiebestange 3 aufsetzbar ist. Nicht dargestellte Rasthebel können in die Bohrungen zur Einnahme verschiedener Höhenpositionen eingeschwenkt werden, so dass der Träger 9 in verschiedenen Höhenpositionen arretierbar ist.

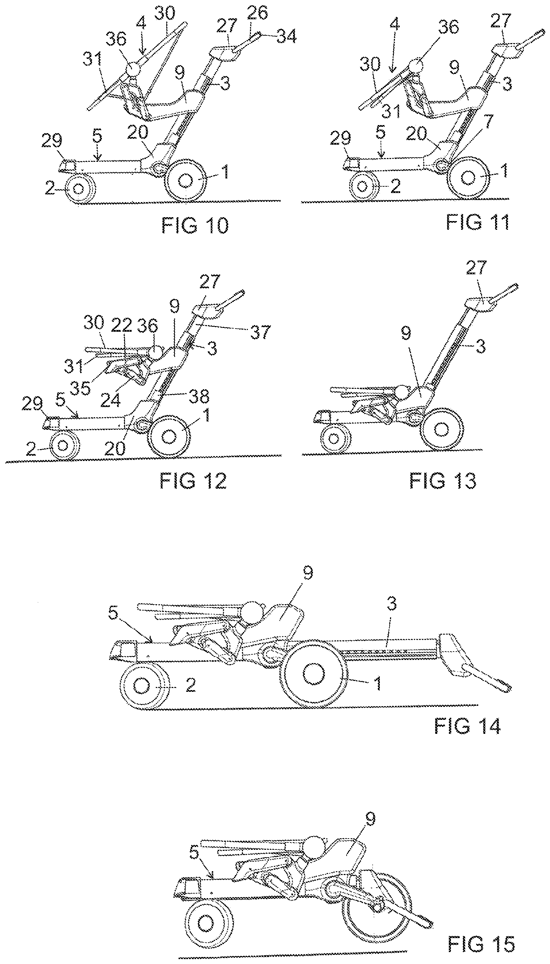

Aus der isometrischen Darstellung in FIG 9 ist ferner ersichtlich, dass das Profil mit den Längsführungen 18 oberhalb des Kopfteiles 20 in einem Freischnitt 38 endet. Der Freischnitt 38 ist in der Höhe so ausgelegt, dass dann, wenn der Träger 9 nach unten fährt und, wie aus den FIG 13, 14 und 15 ersichtlich ist, das Kopfteil 20 überstülpt, die Führungselemente, seien es Bolzen oder Gleitrippen, die in den Längsführungen 18 entlang gleiten, aus diesen heraus und in den Freischnitt 38 gleiten. Es ist aus FIG 14 ersichtlich, dass dann die Schiebestange 3 nach dem Lösen einer nicht dargestellten Arretierung am Kopfteil 20 nach unten und hinten verschwenkbar ist, um in das Basiselement 5 hineingeschoben werden zu können.

Die Einnahme der unteren Position des Trägers 9 ist in den FIG 13, 14 und 15 dargestellt. FIG 13 zeigt zugleich, dass in dieser Position das Wagengestell noch voll nutzbar ist. Wenn deshalb der dort eingezeichnete Einsatz 4 durch einen anderen ersetzt wird, kann das Wagengestell beispielsweise auch als Kinderwagengestell mit einem speziellen Schalensitz verwendet werden oder es kann auch eine Ladefläche montiert werden. Der Träger 9, der z. B. aus Kunststoff oder einem Spritzgussmetall gefertigt sein kann, weist zur Gewichtsreduzierung Seitenteile mit Langlöchern 39 auf. Der U-förmige Träger 24 ist verschwenkbar am Träger 9 gelagert und weist nach oben vorstehende Schenkel auf, an denen Verbindungsteile 23 angelenkt sind. Die Verbindungsteile 23 sind ebenfalls Formteile aus Kunststoff, die mit den freien Schenkeln 22 des vorderseitigen U-förmigen Trägers 21 verbunden sind. Dieser U-förmige Träger 21 ist verdrehbar in dem vorderen Teil des Trägers 9 gelagert, so dass, wie aus den FIG 11 ff. ersichtlich ist, das als Kräfteparallelogramm dastehende Gebilde nach hinten verschoben werden kann.

Die Haltevorrichtung 10 weist ferner an dem U-förmigen Träger 21 einen Stützabschnitt 35 auf, der die Schenkel 22 des U-förmigen Trägers 24 im aufgestellten Zustand abstützt. Auch hierüber kann eine Verriegelung in der Aufstellposition erfolgen. An den Verbindungsteilen, die beidseitig an der Haltevorrichtung 10 vorgesehen sind, sind Aufnahmen 25 für Adapter 19 vorgesehen. Diese Adapter 19 sind an den Schwenkgelenken 36 eines abnehmbaren Einsatzes 4 befestigt. Durch Lösen einer nicht dargestellten Verbindung kann also der Einsatz 4 mit dem Adapter 19 abgenommen werden.

Der Einsatz 4 ist ein Sitzeinsatz und besteht aus einem unteren Bügel 31 und einem oberen Bügel 30. An der oberen Querstange des Bügels 30 ist ein Tucheinsatz 32 befestigt, der unten sitzförmig umgelenkt und an einer vorderen Querstange 33 befestigt ist. Dadurch ist ein Sitz geschaffen. Wenn der obere Bügel 30 über die Gelenke 36 nach vorne über den unteren Bügel 31 geschwenkt wird, verkürzt sich das Gebilde, so dass es über die verschwenkbaren U-förmigen Träger 21 und 24 nach hinten verschwenkbar ist und gleichzeitig abgesenkt werden kann, wie aus den FIG 11 und 12 ersichtlich ist. Der Träger 9 kann nach unten über das Kopfteil 20 verfahren werden, wie zuvor schon beschrieben, um die Schiebestange 3 in die aus FIG 14 ersichtliche Position zu verschwenken und dann gemäß FIG 15 in den Kanal des Basiselementes 5 eingeschoben werden zu können.

Um das Wagengestell schieben zu können, ist am oberen Ende des oberen Abschnittes 37 der Schiebestange 3 ein Lagerkopf 27 vorgesehen, in welchem ein Schiebebügel 26 entweder starr oder um einen Stellwinkel beweglich gelagert ist. Dieser Schiebebügel 26 kann bei beweglicher Lagerung zugleich auch eine Bremsvorrichtung betätigen. Des Weiteren weist er im Ausführungsbeispiel an den zueinander stehenden Enden Handgriffe 34 auf, auf die beispielsweise die Hand einer schiebenden Person auflegbar ist.

Aus der zusammengelegten Position gemäß FIG 15 kann das Gestell in umgekehrter Weise, wie aus den FIG 10 bis 14 ersichtlich ist, wieder aufgestellt werden, bis es die in FIG 10 dargestellte Seitenansicht einnimmt, die mit der isometrischen Darstellung in FIG 9 übereinstimmt.

### Bezugszeichenliste

- 1: Hinterräder
- 2: Vorderrad
- 3: Schiebestange
- 4: abnehmbarer Einsatz
- 5: Basiselement
- 6: Lagerhalter für Vorderrad
- 7: Lagerhalter für Hinterrad
- 8: Schwenklager für Schiebestange
- 9: Träger
- 10: Haltevorrichtung
- 11: Abstandselement
- 12: Schiebeelement
- 13: Haltestangen
- 14: Mittendurchbruch
- 15: Radgabel
- 16: Halterung
- 17: Drehscheibe
- 18: Längsführung
- 19: Adapter
- 20: Kopfteil
- 21: U-förmiger Träger
- 22: Schenkel
- 23: Verbindungsteil
- 24: U-förmiger Träger
- 25: Aufnahmen
- 26: Schiebebügel
- 27: Lagerkopf
- 28: Längsträger
- 29: Brückenelement
- 30: oberer Bügel
- 31: unterer Bügel
- 32: Tucheinsatz
- 33: Querstange
- 34: Handgriff
- 35: Stützabschnitt
- 36: Gelenk
- 37: oberer Abschnitt
- 38: Freischnitt
- 39: Langloch

## Patentansprüche

1. Wagengestell für einen Kinder- oder Puppenwagen mit mindestens zwei beabstandet zueinander angeordneten Hinterrädern (1), mindestens einem Vorderrad (2), mindestens einer Schiebestange (3) und mindestens einem abnehmbaren Einsatz (4), wobei das Wagengestell ein Basiselement (5) mit vorderseitig mindestens einem Lagerhalter (6) für das mindestens eine Vorderrad (2) und rückseitig seitlich angeordneten Lagerhaltern (7) für die Hinterräder (1) und einem Schwenklager (8) für die mindestens eine Schiebestange (3) und einen an der Schiebestange (3) fixierten, im wesentlichen horizontal verlaufenden Träger (9) mit Haltevorrichtungen (10, 13) zur Aufnahme des mindestens einen abnehmbaren Einsatzes (4) aufweist, **dadurch gekennzeichnet, dass** die Schiebestange (3) an der Rückseite des Basiselementes (5) schwenkbar gelagert ist und mindestens in der Aufstellposition mittels Arretierungsmitteln am Basiselement (5) schräg nach oben und hinten die Hinterräder überstehend gehalten ist und nach dem Lösen der Arretierungsmittel und nach einem rückseitigen Umlegen in eine zum Basiselement (5) horizontale Verlängerungsposition auf, in oder unter das Basiselementes (5) in eine Verstauposition von hinten nach vorne verschiebbar ist,
wobei das Basiselement (5) aus einem Tunnelprofil oder aus zwei spiegelbildlich ausgebildeten und angeordneten profilierten Längsträgern (28) besteht, die vorderseitig über ein Brückenelement (29), an dem das mindestens eine Vorderrad (2) befestigt ist, und rückseitig über ein Kopfteil (20), an dem die Lagerhalter (7) für die Hinterräder befestigt sind, miteinander verbunden sind, wobei die mindestens eine Schiebestange (3) in das Tunnelprofil oder zwischen die beiden Längsträger (28) einschiebbar ist.

2. Wagengestell nach Anspruch 1, **dadurch gekennzeichnet, dass** die mindestens eine Schiebestange (3) ein Profilrohr mit seitlichen Längsführungen (18) für Befestigungsmittel an dem Träger (9) ist und als einzige Schiebestange (3) oder mit einer solchen weiteren kombiniert ausgeführt ist, wobei beide parallel zur Mittenachse des Basiselementes (5) verlaufend angeordnet sind, dass der Träger (9) höhenverstellbar an der mindestens einen Schiebestange (3) befestigt ist und aus einer oberen Gebrauchsstellung in eine untere, von der Schiebestange (3) entkoppelte Gebrauchsstellung verbringbar ist, in der der Träger (9) auf dem Kopfteil (20) des Basiselementes aufsitzt, und dass an dem oberen Ende der mindestens einen Schiebestange (3) mindestens ein Schiebeelement (12), vorzugsweise in Form eines ringförmigen Griffes oder zweier Schiebebügel (26) befestigbar ist.

3. Wagengestell nach Anspruch 1 oder 2, **dadurch gekennzeichnet, dass** am Basiselement (5) Haltevorrichtungen (10), Abstandselemente (11) oder Trägersysteme für die Fixierung von einem Einsatz (4), einem Korb oder einer Trägerplattform oder Adaptern (19) an solchen Einsätzen vorgesehen sind.

4. Wagengestell nach einem der vorhergehenden Ansprüche, **dadurch gekennzeichnet, dass** in oder an dem Basiselement (5) oder dem Kopfteil (20) und dem Träger (9) mindestens eine Ausnehmung und Befestigungsmittel zur Lagefixierung der mindestens einen Schiebestange (3) mindestens in der Aufstellposition vorgesehen sind.

5. Wagengestell nach Anspruch 1 oder 3, **dadurch gekennzeichnet, dass** die Haltevorrichtung (10) aus einem U-förmigen Träger (21) besteht, dessen Seitenschenkel (22) in einer Gebrauchsstellung nach oben stehen und dessen Brückenteil schenkbeweglich an oder in dem vorderen Teil des Trägers (9) gelagert ist und an dessen Schenkelenden Verbindungsteile (23) mit Aufnahmen (25) für die Adapter (19) drehbar gelagert sind, die mit den anderen Enden an den Schenkelenden eines weiteren U-förmigen Trägers (24), ein Kräfteparallelogramm bildend, angelenkt sind, und dass das Brückenteil des weiteren U-förmigen Trägers (24) in dem Träger (9) in Richtung der Schiebestange (3) verschwenkbar gelagert ist.

6. Wagengestell nach einem der vorhergehenden Ansprüche, **dadurch gekennzeichnet, dass** der mindestens eine abnehmbare Einsatz (4) ein schalenförmiger Trägersitz oder ein Sportwagenaufsatz oder ein Liegeaufsatz oder ein Kinderautositz oder eine Tragetasche für ein Kleinkind oder für eine Puppe ist oder der mindestens eine abnehmbare Einsatz (4) eine Tragetasche, ein Korb, ein Netz oder ein Behältnis oder eine Gitterbox ist.

7. Wagengestell nach Anspruch 1, **dadurch gekennzeichnet, dass** der Träger (9) mit einer Drehscheibe (17) versehen ist, die um einen vertikale Achse drehbar gelagert ist und an der die Haltevorrichtungen (10, 13) zur Aufnahme des mindestens einen Einsatzes (4) befestigbar sind.

8. Wagengestell nach Anspruch 2, **dadurch gekennzeichnet, dass** die mindestens eine Schiebestange (3) eine Teleskopstange ist und diese ausziehbar ausgebildet ist, wobei am oberen Ende ein Lagerkopf (27) für den ringförmigen Griff oder für die zwei Schiebebügel (26) vorgesehen ist.

9. Wagengestell nach Anspruch 1, **dadurch gekennzeichnet, dass** der Träger (9) zusätzlich zu der Befestigung an der mindestens einen Schiebestange (3) mit einem beabstandet hierzu angeordneten Distanzteil (11) am Basiselement (5) abgestützt ist.

10. Wagengestell nach Anspruch 1, **dadurch gekennzeichnet, dass** der Träger (9) eine ringförmige Plattform ist und diese einen Mittendurchbruch (14) aufweist und in den Mittendurchbruch (14) ein weiterer abnehmbarer Einsatz einsetzbar ist, wobei der weitere abnehmbare Einsatz ein Korb oder ein Korbeinsatz ist.

11. Wagengestell nach Anspruch 1, **dadurch gekennzeichnet, dass** das Basiselement (5) und/oder der Träger (9) aus Kunststoff bestehen oder eine Rahmenstruktur aus Kunststoff oder Metall aufweisen und dass in das Basiselement (5) und/oder in den Träger (9) eine korbförmige Ausformung eingebracht ist oder in die Rahmenstruktur ein Korbeinsatz aus Kunststoff oder Metall ein- oder aufsetzbar ist.

12. Wagengestell nach Anspruch 1, **dadurch gekennzeichnet, dass** der Lagerhalter (6) des mindestens einen Vorderrades und/oder die Lagerhalter (7) der Hinterräder an der Unterseite des Basiselementes (5) zur Mittenlängsachse hin verschwenkbar angeordnet und in mindestens der Aufstellposition arretierbar sind.

13. Wagengestell nach Anspruch 1, **dadurch gekennzeichnet, dass** die mindestens eine Schiebestange (3) im Schwenklager (8) über eine Federanordnung gelagert ist und dass die Federanordnung durch eine Feder realisiert ist, welche parallel zur Mittenachse des Basiselementes (5) im oder am Schwenklager (8) angeordnet ist.

14. Wagengestell nach Anspruch 1, **dadurch gekennzeichnet, dass** die Lagerhalter (7) für die Hinterräder gegen die Kraft einer Feder verschwenkbare Schwingen sind, an deren Enden die Lager für Hinterräder vorgesehen sind.

## Claims

1. Carriage frame for a children's or doll's buggy with at least two rear wheels (1) arranged at a distance from each other, at least one front wheel (2), at least one push bar (3), and at least one detachable insert (4), wherein the carriage frame has a base element (5) with at least one bearing holder (6) at the front for the at least one front wheel (2) and laterally arranged bearing holders (7) at the rear for the rear wheels (1), and a pivot bearing (8) for the at least one push bar (3) and a substantially horizontally extending support (9) fixed to the push bar (3) with holding devices (10, 13) for receiving the at least one detachable insert (4), **characterized in that** the push bar (3) is swivel-mounted on the back of the base element (5), and is held at least in the set-up position by means of locking means on the base element (5) diagonally upwards and backwards protruding the rear wheels, and is slidable after loosening the locking means and after a backside flip to an extension position horizontal to the base element (5) on, in or below the base element (5) in a stow position from back to front, wherein the base element (5) consists of a tunnel profile or two profiled longitudinal supports (28) formed and arranged as mirror images, which are interconnected at the front by a bridge element (29), on which the at least one front wheel (2) is attached, and at the rear by a headrest (20), on which the bearing holders (7) for the rear wheels are attached, wherein the at least one push bar (3) is insertable into the tunnel profile or between the both longitudinal supports (28).

2. Carriage frame according to claim 1, **characterized in that** the at least one push bar (3) is a profile tube with lateral guides (18) for fastening elements on the support (9), and is constructed as sole push bar (3) or combined with such another, wherein both are arranged parallel to the middle axis of the base element (5), that the support (9) is attached height-adjustably to the at least one push bar (3), and is moveable from an upper position of use to a lower position of use decoupled from the push bar (3), in which the support (9) mounts on the headrest (20) of the base element, and that at least one sliding element (12) is attachable to the upper end of the at least one push bar (3), preferably in form of a ring-shaped handle or two sliding brackets (26).

3. Carriage frame according to claim 1 or 2, **characterized in that** holding devices (10), distance elements (11) or support systems for fixing of an insert (4), a basket or a carrier platform or adapters (19) on such inserts are provided on the base element (5).

4. Carriage frame according to one of the preceding claims, **characterized in that** at least one recess and fastening elements for fixing the position of at least one push bar (3) are provided on or in the base element (5) or the headrest (20) and the support (9) at least in the set-up position.

5. Carriage frame according to claim 1 or 3, **characterized in that** the holding device (10) consists of an U-shaped support (21), of which side shanks (22) stand up in a position of use, and of which bridge section is swivel-mounted on or in the front section of the support (9),and on whose shank ends connecting components (23) with mountings (25) for the adapters (19) are pivoted, which is hinged with the other ends on the shank ends of a further U-shaped support (24) forming a parallelogram of forces, and that the bridge section of the further U-shaped support (24) is swivel-mounted in the support (9) in the direction of the push bar (3).

6. Carriage frame according to one of the preceding claims, **characterized in that** the at least one detachable insert (4) is a cupped carrier seat, or a buggy attachment, or a lounger attachment, or a child car seat, or a carrier bag for a baby or for a doll, or the at least one detachable insert (4) is a carrier bag, a basket, a net, or a container, or a lattice box.

7. Carriage frame according to claim 1, **characterized in that** the support (9) is equipped with a turntable (17), which is pivoted about a vertical axis and is attachable to the holding devices (10, 13) for the holding of the at least one insert (4).

8. Carriage frame according to claim 2, **characterized in that** the at least on push bar (3) is a telescopic bar, and this is designed to be extendable, wherein a bearing head (27) is provided on the upper end for the ring-shaped handle or for the two sliding brackets (26).

9. Carriage frame according to claim 1, **characterized in that** the support (9) is supported by a distance element (11), which is arranged at a distance to this, on the base element (5) additionally to the fastening on the at least one push bar (3).

10. Carriage frame according to claim 1, **characterized in that** the support (9) is a ring-shaped platform, and this has a central opening (14), and a further detachable insert can be inserted into the central opening (14), wherein the further detachable insert is a basket or a basket insert.

11. Carriage frame according to claim 1, **characterized in that** the base element (5) and/or the support (9) consist of plastic, or have a frame structure of plastic or metal, and that a basket-shaped form is inserted in the base element (5) and/or in the support (9), or a basket insert of plastic or metal is insertable or mountable.

12. Carriage frame according to claim 1, **characterized in that** the bearing holder (6) of the at least one front wheel and/or the bearing holders (7) of the rear wheels are arranged on the bottom of the base element (5) pivotable to the central longitudinal axis, and are lockable in at least the set-up position.

13. Carriage frame according to claim 1, **characterized in that** the at least one push bar (3) is bearing-mounted by a spring arrangement in the pivot bearing (8), and that the spring arrangement is realised by a spring, which is arranged in or on the pivot bearing (8) parallel to the middle axis of the base element (5).

14. Carriage frame according to claim 1, **characterized in that** the bearing holders (7) for the rear wheels are swing arms pivotable against the force of a spring, on the ends of which the bearings for the rear wheels are provided.

## Revendications

1. Châssis de poussette pour poussette de puériculture ou à usage ludique comprenant au moins deux roues arrière (1) agencées à distance l'une de l'autre, au moins une roue avant (2), au moins une tige de poussée (3) et au moins un insert (4) amovible, dans lequel le châssis de poussette présente un élément de base (5) pourvu côté avant d'au moins un porte-palier (6) pour la au moins une roue avant (2) et côté arrière des porte-palier (7) agencés latéralement pour les roues arrière (1) et d'un palier pivotant (8) pour la au moins une tige de poussée (3), et un support (9) fixé à la tige de poussée (3) et s'étendant sensiblement horizontalement, pourvu de dispositifs de retenue (10, 13) destinés à loger le au moins un insert (4) amovible, **caractérisé en ce que** la tige de poussée (3) est montée pivotante sur la face arrière de l'élément de base (5) et est retenue au moins dans la position installée à l'aide de moyens de blocage sur l'élément de base (5) de manière à faire saillie de façon oblique vers le haut et vers l'arrière des roues arrière et, une fois les moyens de blocage débloqués et après un rabattement vers l'arrière dans une position allongée horizontale par rapport à l'élément de base (5), peut coulisser de l'arrière vers l'avant dans ou sous l'élément de base (5) dans une position escamotée,
dans lequel l'élément de base (5) est constitué d'un profilé en tunnel ou de deux longerons (28) profilés agencés et formés à symétrie spéculaire, qui sont reliés l'un à l'autre côté avant par l'intermédiaire d'un élément pont (29), auquel la au moins une roue avant (2) est fixée, et côté arrière par l'intermédiaire d'une partie tête (20) à laquelle les porte-palier (7) pour les roues arrière sont fixés, dans lequel la au moins une tige de poussée (3) peut être introduite dans le profilé en tunnel ou entre les deux longerons (28).

2. Châssis de poussette selon la revendication 1, **caractérisé en ce que** la au moins une tige de poussée (3) est un tube profilé pourvu de guidages longitudinaux (18) latéraux pour des moyens de fixation au support (9) et est réalisée sous la forme d'une seule tige de poussée (3) ou d'une tige de poussée combinée à une autre tige de poussée de ce type, dans lequel les deux s'étendent parallèlement à l'axe médian de l'élément de base (5), **en ce que** le support (9) est fixé de manière réglable en hauteur à la au moins une tige de poussée (3) et peut être amenée d'une position d'utilisation supérieure dans une position d'utilisation inférieure découplée de la tige de poussée (3), dans laquelle le support (9) repose sur la partie tête (20) de l'élément de base, et **en ce qu'**au moins un élément de poussée (12), se présentant de préférence sous forme d'une poignée annulaire ou de deux arceaux de poussée (26), peut être fixé à l'extrémité supérieure de la au moins une tige de poussée (3).

3. Châssis de poussette selon la revendication 1 ou 2, **caractérisé en ce que** des dispositifs de retenue (10), des éléments d'écartement (11) ou des systèmes de support pour la fixation d'un insert (4), d'un panier ou d'une plateforme de support ou d'adaptateurs (19) ou auxdits inserts sont prévus sur l'élément de base (5).

4. Châssis de poussette selon l'une quelconque des revendications précédentes, **caractérisé en ce qu'**au moins un évidement et des moyens de fixation permettant de fixer la position de la au moins une tige de poussée (3) au moins dans la position installée sont prévus dans ou sur l'élément de base (5) ou la partie tête (20) et le support (9).

5. Châssis de poussette selon la revendication 1 ou 3, **caractérisé en ce que** le dispositif de retenue (10) est constitué d'un support (21) en forme de U, dont les branches latérales (22) se trouvent à la verticale dans une position d'utilisation et dont la partie pont est montée pivotante sur ou dans la partie avant du support (9) et aux extrémités de branche desquelles des pièces de liaison (23) pourvues d'évidements (25) pour les adaptateurs (19) sont montées en rotation, lesquelles sont articulées avec les autres extrémités aux extrémités de branche d'un autre support (24) en forme de U, de manière à former un parallélogramme de force, et **en ce que** la partie pont de l'autre support (24) en forme de U est montée dans le support (9) de manière à pouvoir pivoter en direction de la tige de poussée (3).

6. Châssis de poussette selon l'une quelconque des revendications précédentes, **caractérisé en ce que** le au moins un insert (4) amovible est un siège de support en forme de coque ou un hamac ou un landau ou un siège auto ou un couffin pour un nourrisson ou pour une poupée ou le au moins un insert (4) amovible est un sac de transport, un panier, un filet ou un contenant ou un box grillagé.

7. Châssis de poussette selon la revendication 1, **caractérisé en ce que** le support (9) est pourvu d'un plateau tournant (17), qui est monté de manière à pouvoir tourner autour d'un axe vertical et auquel peuvent être fixés les dispositifs de retenue (10, 13) destinés à loger le au moins un insert (4).

8. Châssis de poussette selon la revendication 2, **caractérisé en ce que** la au moins une tige de poussée (3) est une tige télescopique et celle-ci peut être déployée, dans lequel une tête de palier (27) pour la poignée annulaire ou pour les deux arceaux de poussée (26) est prévue à l'extrémité supérieure.

9. Châssis de poussette selon la revendication 1, **caractérisé en ce que** le support (9), en plus de la fixation à la au moins une tige de poussée (3), est en appui sur l'élément de base (5) au moyen d'une pièce d'écartement (11) agencée à distance de ladite tige.

10. Châssis de poussette selon la revendication 1, **caractérisé en ce que** le support (9) est une plateforme annulaire et celle-ci présente une ouverture centrale (14) et un autre insert amovible peut être inséré dans l'ouverture centrale (14), dans lequel l'autre insert amovible est un panier ou un panier encastrable.

11. Châssis de poussette selon la revendication 1, **caractérisé en ce que** l'élément de base (5) et/ou le support (9) sont constitués de matière plastique ou présentent une structure de cadre en matière plastique ou en métal et **en ce qu'**une partie conformée en forme de panier est introduite dans l'élément de base (5) et/ou dans le support (9) ou un panier encastrable en matière plastique ou en métal peut être inséré ou mis en place dans la structure de cadre.

12. Châssis de poussette selon la revendication 1, **caractérisé en ce que** le porte-palier (6) de la au moins une roue avant et/ou les porte-palier (7) des roues arrière sont agencés sur la face inférieure de l'élément de base (5) de manière à pouvoir pivoter en direction de l'axe longitudinal médian et peuvent être bloqués dans au moins la position installée.

13. Châssis de poussette selon la revendication 1, **caractérisé en ce que** la au moins une tige de poussée (3) est montée dans le palier pivotant (8) par l'intermédiaire d'un ensemble ressort et **en ce que** l'ensemble ressort est réalisé par un ressort, lequel est agencé dans ou sur le palier pivotant (8) parallèlement à l'axe médian de l'élément de base (5).

14. Châssis de poussette selon la revendication 1, **caractérisé en ce que** les porte-palier (7) pour les roues arrière sont des bras oscillants pouvant pivoter à l'encontre de la force d'un ressort, aux extrémités desquels les paliers pour les roues arrière sont prévus.
